Europäisches Patentamt

European Patent Office

Office européen des brevets

(19)

(11) **EP 1 214 237 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(21) Anmeldenummer: **00979377.9**

(22) Anmeldetag: **20.09.2000**

(51) Int Cl.⁷: $B61L\ 3/00$, $B60L\ 15/20$

(86) Internationale Anmeldenummer:
**PCT/DE2000/003320**

(87) Internationale Veröffentlichungsnummer:
**WO 2001/021465 (29.03.2001 Gazette 2001/13)**

(54) **EINRICHTUNG UND VERFAHREN ZUM EINSPAREN VON FAHRENERGIE BEI SCHIENENFAHRZEUGEN**

DEVICE AND METHOD FOR SAVING MOTIVE ENERGY IN RAIL VEHICLES

DISPOSITIF ET PROCEDE POUR ECONOMISER L'ENERGIE CINETIQUE DE VEHICULES SUR RAILS

(84) Benannte Vertragsstaaten:
**AT BE CH CY DE DK ES FI FR GB GR IE IT LI LU MC NL PT SE**

(30) Priorität: **22.09.1999 DE 19946224**

(43) Veröffentlichungstag der Anmeldung:
**19.06.2002 Patentblatt 2002/25**

(73) Patentinhaber: **SIEMENS AKTIENGESELLSCHAFT 80333 München (DE)**

(72) Erfinder: **BAIER, Thorsten 38315 Schladen (DE)**

(56) Entgegenhaltungen:
**DE-A- 1 663 158     DE-A- 2 631 540**
**DE-B- 1 237 612**

**Beschreibung**

Die Erfindung bezieht sich auf eine Einrichtung für ein Schienenfahrzeug mit einer Steuereinheit, die unter Heranziehung eines gemessenen, den Ort des Schienenfahrzeugs angebenden Ortsmeßwertes und vorgegebener, abgespeicherter Wegstreckendaten den Abstand des Schienenfahrzeugs zum jeweils vorgesehenen nächsten Haltepunkt ermittelt, unter Heranziehung eines gemessenen, die jeweilige Zeit angebenden Zeitmeßwertes und eines vorgegebenen, abgespeicherten Fahrplans die verbleibende Fahrzeit zum nächsten Haltepunkt ermittelt und unter Berücksichtigung des ermittelten Abstands, der ermittelten verbleibenden Fahrzeit, eines die Geschwindigkeit des Schienenfahrzeugs angebenden Geschwindigkeitsmeßwertes und vorgegebener, das Ausrollverhalten des Schienenfahrzeugs bei abgeschaltetem Antrieb beschreibender Ausrolldaten einen empfohlenen Antriebsabschaltzeitpunkt bildet, ab dem das Schienenfahrzeug unter Einhaltung des Fahrplans den jeweils fahrplanseitig vorgesehenen nächsten Haltepunkt antriebslos rechtzeitig erreicht, und einer mit der Steuereinheit verbundenen und von dieser angesteuerten Ausgabeeinrichtung, die ein den empfohlenen Antriebsabschaltzeitpunkt angebendes Abschaltsignal erzeugt.

Eine derartige Einrichtung ist aus der US-Patentschrift 5,239,472 bekannt und dient zum Einsparen von Fahrenergie bei Schienenfahrzeugen. Diese Einrichtung weist als Steuereinheit einen Mikroprozessor auf, der mit einem von einer Wegmeßeinrichtung erfaßten Ortsmeßwert und mit in einem Speicher (storage) abgespeicherten Wegstreckendaten den Abstand des Schienenfahrzeugs zum jeweils nächsten Haltepunkt bestimmt. Der Mikroprozessor ermittelt darüber hinaus mit einem gemessenen Zeitmeßwert, der die jeweilige Uhrzeit angibt, sowie mit einem vorgegebenen, abgespeicherten Fahrplan die dem Schienenfahrzeug zum Erreichen des nächsten Haltepunkts verbleibende Fahrzeit. Mit dem Abstandswert sowie der verbleibenden Fahrzeit errechnet der Mikroprozessor anschließend unter Berücksichtigung der jeweiligen Fahrgeschwindigkeit und unter Berücksichtigung des Ausrollverhaltens des Schienenfahrzeugs denjenigen Zeitpunkt - nachfolgend empfohlener Antriebsabschaltzeitpunkt genannt - , ab dem das Schienenfahrzeug den jeweils nächsten Haltepunkt antriebslos - also durch Ausrollen oder gebremst - unter Einhaltung des Fahrplans erreichen kann. Mit der Steuereinheit ist eine Ausgabeeinrichtung in Form einer Anzeigeeinrichtung verbunden. Die Anzeigeeinrichtung wird von der Steuereinheit derart angesteuert, daß sie durch Anzeige des Begriffs "coast" signalisiert, ab wann der Antrieb des Schienenfahrzeugs ausgeschaltet werden kann. Bei der vorbekannten Einrichtung werden die Wegstreckendaten und der vorgegebene Fahrplan vor Inbetriebnahme des Schienenfahrzeugs von einer streckenseitigen Recheneinheit zum Schienenfahrzeug übertragen und dort fest abgespeichert. Bei der vorbekannten Einrichtung handelt es sich zusammengefaßt also um eine Energiespar-Einrichtung, die anzeigt, ab wann der nächste Haltepunkt antriebslos und damit ohne Energieverbrauch unter Ausnutzung der jeweiligen kinetischen Energie des Schienenfahrzeugs fahrplangerecht erreicht werden kann.

Der Erfindung liegt die Aufgabe zugrunde, eine Einrichtung der eingangs beschriebenen Art derart fortzuentwickeln, daß mit dieser Abweichungen des tatsächlichen Fahrverhaltens vom empfohlenen Fahrverhalten zuverlässig erfaßbar sind.

Diese Aufgabe wird bei einer Einrichtung der eingangs beschriebenen Art erfindungsgemäß dadurch gelöst, daß die Einrichtung einen Dateneingang aufweist, an dem ein den tatsächlichen Antriebsabschaltzeitpunkt angebendes Istwertsignal in die Einrichtung eingebbar ist, wobei der tatsächliche Antriebsabschaltzeitpunkt denjenigen Zeitpunkt angibt, zu dem der Antrieb nach dem Erzeugen des Abschaltsignals tatsächlich abgeschaltet wurde, und daß die Steuereinheit einen Speicher aufweist, in dem sie den tatsächlichen und den jeweils zugeordneten, empfohlenen Antriebsabschaltzeitpunkt zur Auswertung abspeichert.

Ein wesentlicher Vorteil der erfindungsgemäßen Einrichtung besteht darin, daß mit dieser Abweichungen des tatsächlichen Fahrverhaltens des Schienenfahrzeugs vom empfohlenen Fahrverhalten erfaßbar sind; denn die erfindungsgemäße Einrichtung weist einen Dateneingang auf, an dem ein den tatsächlichen Antriebsabschaltzeitpunkt angebendes Istwertsignal in die Einrichtung eingebbar ist. Liegt dieses Istwertsignal vor, so kann die Steuereinheit der erfindungsgemäßen Einrichtung den tatsächlichen Antriebsabschaltzeitpunkt und den errechneten empfohlenen Antriebsabschaltzeitpunkt bzw. Datensignale, die diese Zeitpunkte angeben, zur späteren Auswertung in ihrem Speicher abspeichern.

Um zu erreichen, daß Abweichungen des Fahrverhaltens auch quantitativ bereits in der erfindungsgemäßen Einrichtung festgestellt werden, ist erfindungsgemäß vorgesehen, daß die Steuereinheit derart ausgestaltet ist, daß sie durch Differenzbildung zwischen dem tatsächlichen und dem jeweils zugeordneten empfohlenen Antriebsabschaltzeitpunkt einen Zeitdifferenzwert bildet.

Unter Umständen kann es vorkommen, daß der Schienenfahrzeugführer trotz entsprechender Signalisierung durch das Abschaltsignal der Ausgabeeinrichtung nicht umgehend den Antrieb des Schienenfahrzeugs abschaltet, so daß eine erhebliche Zeitdifferenz zwischen dem empfohlenen Antriebsabschaltzeitpunkt und dem tatsächlichen Antriebsabschaltzeitpunkt auftritt und die mit dem Abschalten des Antriebs gewünschte Energieersparnis vermindert wird und u. U. sogar weitgehend ausbleibt. Um dem Schienenfahrzeugführer dies zu signalisieren, wird gemäß einer ersten vorteilhaften Weiterbildung der erfindungsgemäßen Einrichtung vorgeschlagen, daß die Steuereinheit einen Ausgang aufweist und derart ausgestaltet ist, daß sie an ihrem Ausgang ein Warnsignal erzeugt, wenn der Zeitdifferenzwert einen vorgegebenen Schwellenwert überschreitet. Bei dieser Weiterbildung wird der Schienenfahrzeugführer auf den zeitlichen Verzug aufmerksam gemacht, so daß er sein Fahrverhalten gezielt verbessern kann; ist hingegen die Verzögerung schienenfahrzeugseitig technisch bedingt, so muß bei einmaligem oder wiederholtem Auftreten von Warnsignalen die Einrichtung bzw. die Antriebssteuerung des Schienenfahrzeugs technisch überprüft bzw. gewartet werden.

Gemäß einer zweiten vorteilhaften Weiterbildung der erfindungsgemäßen Einrichtung ist vorgesehen, daß die Steuereinheit derart ausgestaltet ist, daß sie mit zumindest dem jeweils letzten gebildeten Zeitdifferenzwert einen Verzögerungswert bildet und den jeweils nächsten empfohlenen Antriebsabschaltzeitpunkt unter weiterer Berücksichtigung dieses gebildeten Verzögerungswerts ermittelt. Bei dieser zweiten Weiterbildung wird das Abschaltsignal also unter Heranziehung eines Verzögerungswertes gebildet; mit diesem Verzögerungswert kann in vorteilhafter Weise beispielsweise die stets auftretende Reaktionszeit des Schienenfahrzeugführers berücksichtigt werden, die zwischen dem Auftreten des Abschaltsignals und der Abgabe des tatsächlichen Abschaltbefehls durch den Schienenfahrzeugführer stets vergeht. Wird diese Reaktionszeit nämlich berücksichtigt, so kann trotz ihres unvermeidlichen Auftretens ein minimaler bzw. optimaler Energieverbrauch erzielt werden.

Besonders einfach und damit vorteilhaft läßt sich der empfohlene Antriebsabschaltzeitpunkt unter Heranziehung des Verzögerungswertes gewinnen, wenn die Steuereinheit derart ausgestaltet ist, daß sie unter Berücksichtigung des ermittelten Abstands, der ermittelten verbleibenden Fahrzeit, eines die Geschwindigkeit des Schienenfahrzeugs angebenden Geschwindigkeitsmeßwertes und vorgegebener, das Ausrollverhalten des Schienenfahrzeugs bei abgeschaltetem Antrieb beschreibender Ausrolldaten zunächst einen Hilfs-Abschaltzeitpunkt errechnet, ab dem das Schienenfahrzeug unter Einhaltung des Fahrplans den jeweils fahrplanseitig vorgesehenen nächsten Haltepunkt antriebslos rechtzeitig erreicht, und anschließend mit dem Hilfs-Abschaltzeitpunkt und dem Verzögerungswert durch Differenzbildung einen vorverlegten Antriebsabschaltzeitpunkt ermittelt und den vorverlegten Antriebsabschaltzeitpunkt als den empfohlenen Antriebsabschaltzeitpunkt behandelt.

Um insgesamt kurze Fahrzeiten des Schienenfahrzeugs zu erreichen, muß im allgemeinen vermieden werden, daß das Schienenfahrzeug ausschließlich durch Ausrollen am Haltepunkt zum Stillstand kommt, weil nämlich das Ausrollen bei sehr geringen Geschwindigkeiten u. U viel Zeit kosten kann. Aus diesem Grunde wird in der Regel das Schienenfahrzeug bei Erreichen einer Minimalgeschwindigkeit gemäß einem vorgegebenen Bremsverlauf abgebremst. Um diesem Umstand Rechnung zu tragen, ist gemäß einer Fortbildung der erfindungsgemäßen Einrichtung vorgesehen, daß die Steuereinheit derart ausgestaltet ist, daß sie den empfohlenen Antriebsabschaltzeitpunkt unter zusätzlicher Berücksichtigung eines vorgegebenen Bremsverlaufs und einer vorgegebenen Minimalgeschwindigkeit ermittelt, bei deren Unterschreiten das Schienenfahrzeug in der Phase des antriebslosen Zufahrens auf den nächsten Haltepunkt gemäß dem vorgegebenen Bremsverlauf abgebremst wird.

Die Erfindung bezieht sich ebenfalls auf ein Verfahren gemäß dem Oberbegriff des Verfahrensanspruchs 7. Ein derartiges Verfahren läßt sich ebenfalls der eingangs erwähnten US-Patentschrift entnehmen.

Bezüglich dieses Verfahrens liegt der Erfindung die Aufgabe zugrunde, es derart fortzuentwickeln, daß Abweichungen des tatsächlichen Fahrverhaltens vom empfohlenen Fahrverhalten zuverlässig erfaßt werden.

Erfindungsgemäß wird diese Aufgabe durch die kennzeichnenden Merkmale des Verfahrensanspruchs 7 gelöst. Die Vorteile dieses Verfahrens lassen sich inhaltlich den obigen Ausführungen zur erfindungsgemäßen Einrichtung und zu deren Weiter- bzw. Fortbildungen entnehmen; die Vorteile der erfindungsgemäßen Einrichtung gelten nämlich für das erfindungsgemäße Verfahren entsprechend. Das gleiche gilt für die Vorteile der Weiterbildungen des erfindungsgemäßen Verfahrens, die in den Ansprüchen 8 bis 11 beschrieben sind.

Als Erfindung wird außerdem eine Anordnung (vgl. Ansprüche 12 und 13) mit einer erfindungsgemäßen Einrichtung - wie oben beschrieben - und mit einer an einen Datenausgang der erfindungsgemäßen Einrichtung angeschlossenen Auswerteeinrichtung angesehen, die aus der erfindungsgemäßen Einrichtung den abgespeicherten tatsächlichen und den jeweils zugeordneten, empfohlenen Antriebsabschaltzeitpunkt ausliest und durch Differenzbildung zwischen dem tatsächlichen und dem zugeordneten empfohlenen Antriebsabschaltzeitpunkt einen Zeitdifferenzwert bildet. Die Auswerteeinrichtung kann dabei eine streckenseitige Auswerteeinrichtung sein, die beispielsweise über eine drahtgebundene Verbindung oder eine Funkverbindung mit dem Datenanschluß der erfindungsgemäßen Einrichtung in Verbindung steht. Die Vorteile dieser Anordnung lassen sich den obigen Ausführungen zur erfindungsgemäßen Einrichtung entnehmen.

Zur Erläuterung der Erfindung zeigt eine Figur ein Ausführungsbeispiel für eine erfindungsgemäße Einrichtung, mit der sich das erfindungsgemäße Verfahren durchführen läßt und die für die erfindungsgemäße Anordnung geeignet ist.

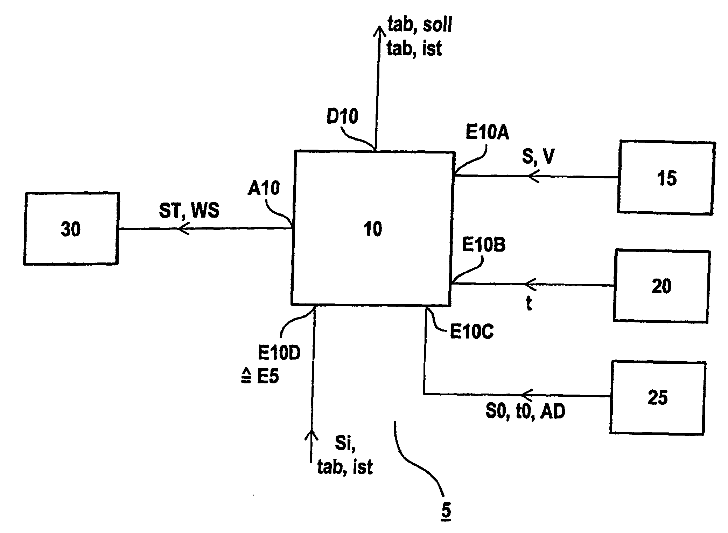

Die Figur zeigt eine Einrichtung 5 für ein nicht dargestelltes Schienenfahrzeug mit einer Steuereinheit 10, die mit ihrem einen Eingang E10A an eine Meßeinrichtung 15 angeschlossen ist. Bei der Meßeinrichtung 15 kann es sich beispielsweise um ein sog. Odometer handeln, das unter Heranziehung der Radumdrehungen des Schienenfahrzeugs die jeweilige Geschwindigkeit des Schienenfahrzeugs und die jeweils bereits zurückgelegte Wegstrecke und damit den jeweiligen Ort S des Schienenfahrzeugs bestimmt. An einem weiteren Eingang E10B der Steuereinheit 10 ist der Steuereinheit 10 ein Zeitgeber in Form einer Uhr 20 vorgeordnet, die die jeweilige Uhrzeit t als Zeitmeßwert zur Steuereinheit 10 überträgt.

Ein zusätzlicher Eingang E10C der Steuereinheit 10 ist mit einem Speicher 25 verbunden, in dem Wegstreckendaten und ein für das Schienenfahrzeug verbindlicher Fahrplan fest abgespeichert sind. Darüber hinaus sind im Speicher 25 Ausrolldaten AD abgespeichert, die das Ausrollverhalten des Schienenfahrzeugs bei abgeschaltetem Antrieb beschreiben; bei diesen Ausrolldaten AD kann es sich beispielsweise um vorab gemessene Daten handeln, die beim Ausrollen des Schienenfahrzeugs, also bei abgeschaltetem Antrieb, vorab gemessen worden sind.

Die Steuereinheit 10 weist darüber hinaus einen ergänzenden Eingang E10D auf, an dem ein den tatsächlichen Antriebsabschaltzeitpunkt angebendes Istwertsignal Si an die Steuereinheit 10 angelegt werden kann. Der ergänzende Eingang E10D der Steuereinheit 10 bildet zugleich einen Dateneingang E5 der Einrichtung 5.

Die Steuereinheit 10 ist zusätzlich mit einem Datenausgang D10 ausgestattet, an dem in einem (nicht dargestellten) Speicher der Steuereinheit 10 abgespeicherte Daten bzw. Datensignale beispielsweise mit einer (nicht dargestellten) Auswerteeinrichtung (Personal Computer bzw. DV-Anlage jeder Art) ausgelesen werden können.

Der Steuereinheit 10 ist an einem Ausgang A10 eine Ausgabeeinrichtung 30 nachgeordnet.

Die Einrichtung 5 läßt sich wie folgt betreiben:

1. "Erstmaliges Betreiben der Einrichtung 5":

Mit der Steuereinheit 10 werden zunächst die Meßeinrichtung 15 sowie die Uhr 20 abgefragt; dabei wird ein den jeweiligen Ort des Schienenfahrzeugs angebender Ortsmeßwert S, ein die jeweilige Geschwindigkeit des Schienenfahrzeugs angebende Geschwindigkeitsmeßgröße V sowie ein die jeweilige Uhrzeit angebender Zeitmeßwert t zu der Steuereinheit 10 übertragen.

Die Steuereinheit 10 liest anschließend aus dem Speicher 25 als Wegstreckenangabe bzw. Wegstreckendaten den Ort S0 des jeweils nächsten Haltepunkts und eine Sollankunftszeit t0 aus; die Sollankunftszeit t0 gibt dabei die Uhrzeit an, zu der das Schienenfahrzeug den jeweils nächsten Haltepunkt erreicht haben soll. Außerdem fragt die Steuereinheit 10 die im Speicher 25 abgespeicherten Ausrolldaten AD ab.

Anschließend wird mit der Sollankunftszeit t0, dem Ortsmeßwert S, dem Ort S0 des nächsten Haltepunkts, der Geschwindigkeit V und den Ausrolldaten AD des Schienenfahrzeugs ein empfohlener Antriebsabschaltzeitpunkt tab,soll bestimmt, ab dem das Schienenfahrzeug bei abgeschaltetem Antrieb den nächsten Haltepunkt unter Ausnutzung seiner kinetischen Energie und unter Einhaltung des modifizierten Fahrplans erreicht.

Um insgesamt kurze Fahrzeiten des Schienenfahrzeugs zu erreichen, muß im allgemeinen vermieden werden, daß das Schienenfahrzeug ausschließlich durch Ausrollen am Haltepunkt zum Stillstand kommt, weil nämlich das Ausrollen bei sehr geringen Geschwindigkeiten u. U viel Zeit kosten kann. Aus diesem Grunde wird in der Regel das Schienenfahrzeug nach dem Unterschreiten einer vorgegebenen Minimalgeschwindigkeit gemäß einem vorgegebenen Bremsverlauf abgebremst. Um diesem Umstand Rechnung zu tragen, kann darüber hinaus vorgesehen werden, daß der empfohlene Antriebsabschaltzeitpunkt tab,soll in der Recheneinheit 10 unter zusätzlicher Berücksichtigung des vorgegebenen Bremsverlaufs und der vorgegebenen Minimalgeschwindigkeit ermittelt wird.

Wie unter Heranziehung dieser Eingabeparameter - also der Sollankunftszeit t0, dem Ortsmeßwert S, dem Ort S0 des nächsten Haltepunkts, der Geschwindigkeit V und den Ausrolldaten AD sowie ggf. einer eventuell vorgegebenen Minimalgeschwindigkeit und einem eventuell vorgegebenen Bremsverlauf - der empfohlene Antriebsabschaltzeitpunkt tab,soll bestimmt werden kann, läßt sich der eingangs erwähnten US-Patentschrift 5,239,472 im Detail entnehmen; sodaß diesbezüglich auf den Inhalt dieser US-Patentschrift 5,239,472 verwiesen wird.

Nachdem der empfohlene Antriebsabschaltzeitpunkt tab,soll bestimmt worden ist, wird dieser in dem nicht dargestellten Speicher der Steuereinheit 10 abgespeichert. Außerdem bildet die Steuereinrichtung 10 ein Ansteuersignal ST für die Ausgabeeinrichtung 30; die Ausgabeeinrichtung 30 erzeugt daraufhin ein Abschaltsignal, das den Antriebsabschaltzeitpunkt angibt. Bei diesem Abschaltsignal kann es sich beispielsweise wie bei der eingangs erläuterten vorbekannten Einrichtung um eine optische Anzeige handeln, die durch Anzeige des Begriffs "coast" signalisiert, daß mit dem Ausrollen begonnen werden kann; statt dessen kann es sich auch um eine Anzeige handeln, die optisch und/oder akustisch den Antriebsabschaltzeitpunkt in Form einer Zeitangabe anzeigt bzw. angibt.

Nachdem die Einrichtung 5 das Abschaltsignal erzeugt hat, erwartet sie an ihrem Dateneingang E5 ein den tatsächlichen Antriebsabschaltzeitpunkt tab,ist angebendes Istwertsignal Si; das Istwertsignal gibt also an, wann der Antrieb des Schienenfahrzeugs tatsächlich vom Schienenfahrzeugführer abgeschaltet worden ist. Ein solches Istwertsignal Si kann beispielsweise von einer in der Figur nicht dargestellten, an den Dateneingang E5 der Einrichtung 5 und an den Antrieb des Schienenfahrzeugs angeschlossenen Überwachungseinrichtung erzeugt werden, die

- jeweils als das Istwertsignal Si ein logisches Ausgangssignal mit einer logischen "1" bildet und an die Einrichtung 5 abgibt, wenn der Antrieb des Schienenfahrzeugs abgeschaltet ist, und die
- jeweils als das Istwertsignal Si ein logisches Ausgangssignal mit einer logischen "0" bildet und an die Einrichtung 5 abgibt, wenn der Antrieb des Schienenfahrzeugs eingeschaltet ist.

Die Einrichtung 5 bzw. die Steuereinheit 10 erkennt dann anhand eines Signalwechsels von einer logischen "0" auf eine logische "1", daß der Antrieb des Schienenfahrzeugs abgeschaltet wurde; der Zeitpunkt des Signalwechsels entspricht also dem tatsächlichen Antriebsabschaltzeitpunkt tab,ist. Da der tatsächliche Antriebsabschaltzeitpunkt tab,ist als Information (Signalwechsel) im Istwertsignal Si enthalten ist, wurde das Bezugszeichen tab,ist in der Figur am Eingang E5 der Einrichtung 5 angebracht.

Die Steuereinheit 10 speichert diesen tatsächlichen Antriebsabschaltzeitpunkt tab,ist in ihrem Speicher ab und bildet anschließend mit dem tatsächlichen Antriebsabschaltzeitpunkt tab,ist und dem empfohlenen Antriebsabschaltzeitpunkt tab,soll durch Differenzbildung einen Zeitdifferenzwert $\Delta$t:

$$\Delta t = tab,ist - tab,soll.$$

Anschließend vergleicht die Steuereinheit 10 den Zeitdifferenzwert $\Delta$t mit einem vorgegebenen Schwellenwert, der beispielsweise 1 Sekunde betragen kann, und erzeugt an ihrem Ausgang A10 ein Warnsignal WS, falls der Zeitdifferenzwert $\Delta$t den vorgegebenen Schwellenwert überschreitet; das Warnsignal Ws wird dann von der Ausgabeeinrichtung 30 in geeigneter Form z. b. optisch oder akustisch ausgegeben.

Darüber hinaus wird in der Steuereinheit 10 aus dem Zeitdifferenzwert $\Delta$t ein Verzögerungswert V gebildet gemäß

$$V = a * \Delta t$$

wobei a ein Faktor zwischen Null und 1 ist. Wie der Faktor a gewählt werden kann, wird im nachfolgenden Abschnitt erläutert.

Der Verzögerungswert V wird von der Einrichtung 5 abgespeichert, beispielsweise in dem Speicher 25.

2. "Weiterer Betrieb der Einrichtung 5, nachdem ein Verzögerungswert V ermittelt wurde und in der Einrichtung 5 abgespeichert vorliegt":

Falls bereits ein abgespeicherter Verzögerungswert V vorliegt, wird zum Bilden des Abschaltsignals anders vorgegangen als zuvor beschrieben; es wird nämlich zum Berechnen des empfohlenen Antriebsabschaltzeitpunkts zusätzlich der abgespeicherte Verzögerungswert V berücksichtigt, der bei dem jeweils zuvor durchgeführten Antriebsabschaltzyklus bestimmt worden ist. Konkret wird hierzu zunächst einmal ein Hilfs-Abschaltzeitpunkt ermittelt, und zwar unter Heranziehung der Sollankunftszeit t0, dem Ortsmeßwert S, dem Ort S0 des nächsten Haltepunkts, der Geschwindigkeit V und den Ausrolldaten AD sowie ggf. einer eventuell vorgegebenen Minimalgeschwindigkeit und einem eventuell vorgegebenen Bremsverlauf; die Bestimmung des Hilfs-Abschaltzeitpunkts erfolgt dabei wie die Bestimmung des empfohlenen Abschaltzeitpunkts bei noch nicht vorliegendem bzw. abgespeichertem Verzögerungswert V (vgl. Beschreibung unter Punkt 1 "Erstmaliges Betreiben der Einrichtung 5").

Mit dem Hilfs-Abschaltzeitpunkt sowie dem Verzögerungswert V wird in der Steuereinheit 10 dann der empfohlene Antriebsabschaltzeitpunkt tab,soll gebildet gemäß:

$$tab,soll = thilf - V$$

wobei thilf den Hilfs-Abschaltzeitpunkt bezeichnet.

Der empfohlene Antriebsabschaltzeitpunkt tab,soll wird also bezogen auf den eigentlich "korrekten" Hilfs-Abschaltzeitpunkt thilf anschaulich betrachtet vorverlegt um die Zeitspanne, die durch den Verzögerungswert V festgelegt ist. Ist dabei der Faktor a gleich Eins, so bedeutet dies, daß der Antriebsabschaltzeitpunkt um den Zeitdifferenzwert $\Delta$t vorverlegt wird; der Faktor a = 1 wird also dann zu wählen sein, wenn davon ausgegangen werden kann, daß die Reaktionszeit des Schienenfahrzeugführers weitgehend konstant ist. Falls jedoch zu erwarten ist, daß die Reaktionszeit des Schienenfahrzeugführers beim nächsten Abschaltbefehl kürzer ausfällt als beim jeweils zeitlich davor liegenden Abschalten, so sollte der Faktor a etwas kleiner als Eins gewählt werden, um ein zu frühes Abschalten des Antriebs zu vermeiden.

Nachdem der empfohlene Antriebsabschaltzeitpunkt tab,soll ermittelt worden ist, erfolgt das Erzeugen des Abschaltsignals in der bereits unter Punkt 1 "Erstmaliges Betreiben der Einrichtung 5" beschriebenen Weise.

Es ist im übrigen auch möglich, den empfohlenen Antriebsabschaltzeitpunkt unter Berücksichtigung mehrerer oder auch aller jeweils zuvor gebildeten Zeitdifferenzwerte zu ermitteln; beispielsweise kann hierzu der Verzögerungswert V als Mittelwert - ggf. auch als Mittelwert unter Berücksichtigung von Gewichtsfaktoren - gebildet werden:

$$V = a * \frac{1}{i} \sum_i (\Delta t_i * b_i)$$

wobei $\Delta t_i$ die abgespeicherten zuvor gebildeten Zeitdifferenzwerte und $b_i$ Gewichtsfaktoren bezeichnen, mit denen beispielsweise festgelegt werden kann, daß neuere Zeitdifferenzwerte stärker berücksichtigt werden als ältere.

An ihrem Datenausgang D10 gibt die Steuereinheit 10 Datensignale ab, die den tatsächlichen Antriebsabschaltzeitpunkt tab,ist und den jeweils zugeordneten, empfohlenen Antriebsabschaltzeitpunkt tab,soll angeben. An dem Datenausgang D10 sind diese Datensignale und damit die entsprechenden Zeitpunkte also mit einer nachgeordneten Auswerteeinrichtung auslesbar. Diese Auswerteeinrichtung kann beispielsweise eine streckenseitige Einrichtung sein, die über eine Funkverbindung oder eine andere Art der Datenverbindung mit der Einrichtung 5 bzw. mit dem Datenausgang D10 der Steuereinheit 10 verbunden ist.

In der Auswerteeinrichtung kann damit also eine statistische Auswertung aller in der Steuereinheit 10 abgespeicherten Daten erfolgen; konkret können also alle tatsächlichen Antriebsabschaltzeitpunkte tab,ist und alle jeweils zugeordneten, empfohlenen Antriebsabschaltzeitpunkte tab,soll ausgewertet werden, beispielsweise um zu prüfen, ob die Einrichtung 5 korrekt arbeitet.

**Patentansprüche**

1. Einrichtung (5) für ein Schienenfahrzeug mit

   - einer Steuereinheit (10), die
   - unter Heranziehung eines gemessenen, den Ort des Schienenfahrzeugs angebenden Ortsmeßwertes (S) und vorgegebener, abgespeicherter Wegstreckendaten den Abstand des Schienenfahrzeugs zum jeweils vorgesehenen nächsten Haltepunkt ermittelt,
   - unter Heranziehung eines gemessenen, die jeweilige Zeit angebenden Zeitmeßwertes (t) und eines vorgegebenen, abgespeicherten Fahrplans die verbleibende Fahrzeit zum nächsten Haltepunkt ermittelt und
   - unter Berücksichtigung des ermittelten Abstands, der ermittelten verbleibenden Fahrzeit, eines die Geschwindigkeit des Schienenfahrzeugs angebenden Geschwindigkeitsmeßwertes (V) und vorgegebener, das Ausrollverhalten des Schienenfahrzeugs bei abgeschaltetem Antrieb beschreibender Ausrolldaten (AD) einen empfohlenen Antriebsabschaltzeitpunkt bildet (tab,soll), ab dem das Schienenfahrzeug unter Einhaltung des Fahrplans den jeweils fahrplanseitig vorgesehenen nächsten Haltepunkt antriebslos rechtzeitig erreicht, und

   - einer mit der Steuereinheit (10) verbundenen und von dieser angesteuerten Ausgabeeinrichtung (30), die ein den empfohlenen Antriebsabschaltzeitpunkt (tab,soll) angebendes Abschaltsignal erzeugt,

**dadurch gekennzeichnet,**

   - **daß** die Einrichtung (5) einen Dateneingang (E5) aufweist, an dem ein den tatsächlichen Antriebsabschaltzeitpunkt (tab,ist) angebendes Istwertsignal (Si) in die Einrichtung (5) eingebbar ist, wobei der tatsächliche Antriebsabschaltzeitpunkt (tab,ist) denjenigen Zeitpunkt angibt, zu dem der Antrieb nach dem Erzeugen des Abschaltsignals tatsächlich abgeschaltet wurde, und
   - **daß** die Steuereinheit (10) einen Speicher aufweist, in dem
   - sie den tatsächlichen und den jeweils zugeordneten, empfohlenen Antriebsabschaltzeitpunkt (tab,ist; tab,soll) zur Auswertung abspeichert.

2. Einrichtung nach Anspruch 1,
   **dadurch gekennzeichnet, daß**

   - die Steuereinheit (10) derart ausgestaltet ist, daß sie
   - durch Differenzbildung zwischen dem tatsächlichen und dem jeweils zugeordneten empfohlenen Antriebsabschaltzeitpunkt (tab,ist; tab, soll) einen Zeitdifferenzwert bildet.

3. Einrichtung nach Anspruch 2,
   **dadurch gekennzeichnet, daß**

   - die Steuereinheit (10) einen Ausgang (A10) aufweist und derart ausgestaltet ist, daß sie

     - an ihrem Ausgang ein Warnsignal (WS) erzeugt, wenn der Zeitdifferenzwert einen vorgegebenen Schwellenwert überschreitet.

4. Einrichtung nach Anspruch 2 oder 3,
   **dadurch gekennzeichnet, daß**

   - die Steuereinheit (10) derart ausgestaltet ist, daß sie

     - mit zumindest dem jeweils letzten gebildeten Zeitdifferenzwert einen Verzögerungswert bildet und

- den jeweils nächsten empfohlenen Antriebsabschaltzeitpunkt unter weiterer Berücksichtigung dieses gebildeten Verzögerungswerts ermittelt.

5. Einrichtung nach Anspruch 4,
   **dadurch gekennzeichnet, daß**

   - die Steuereinheit (10) derart ausgestaltet ist, daß sie

     - unter Berücksichtigung des ermittelten Abstands, der ermittelten verbleibenden Fahrzeit, des die Geschwindigkeit des Schienenfahrzeugs angebenden Geschwindigkeitsmeßwertes (V) und vorgegebener, das Ausrollverhalten des Schienenfahrzeugs bei abgeschaltetem Antrieb beschreibender Ausrolldaten (AD) zunächst einen Hilfs-Abschaltzeitpunkt errechnet, ab dem das Schienenfahrzeug unter Einhaltung des Fahrplans den jeweils fahrplanseitig vorgesehenen nächsten Haltepunkt antriebslos rechtzeitig erreicht, und anschließend
     - mit dem Hilfs-Abschaltzeitpunkt und dem Verzögerungswert durch Differenzbildung einen vorverlegten Antriebsabschaltzeitpunkt ermittelt und den vorverlegten Antriebsabschaltzeitpunkt als den empfohlenen Antriebsabschaltzeitpunkt behandelt.

6. Einrichtung nach einem der vorangehenden Ansprüche,
   **dadurch gekennzeichnet, daß**

   - die Steuereinheit (10) derart ausgestaltet ist, daß sie den empfohlenen Antriebsabschaltzeitpunkt unter zusätzlicher Berücksichtigung eines vorgegebenen Bremsverlaufs und einer vorgegebenen Minimalgeschwindigkeit ermittelt, bei deren Unterschreiten das Schienenfahrzeug in der Phase des antriebslosen Zufahrens auf den nächsten Haltepunkt gemäß dem vorgegebenen Bremsverlauf abgebremst wird.

7. Verfahren zum Erzeugen eines Abschaltsignals, bei dem unter Heranziehung eines gemessenen, den Ort eines Schienenfahrzeugs angebenden Ortsmeßwertes (S) und vorgegebener, abgespeicherter Wegstreckendaten der Abstand des Schienenfahrzeugs zum jeweils vorgesehenen nächsten Haltepunkt ermittelt wird,

   - unter Heranziehung eines gemessenen, die jeweilige Zeit angebenden Zeitmeßwertes (t) und eines vorgegebenen, abgespeicherten Fahrplans die verbleibende Fahrzeit zum nächsten Haltepunkt ermittelt wird und

- unter Berücksichtigung des ermittelten Abstands, der ermittelten verbleibenden Fahrzeit, eines die Geschwindigkeit des Schienenfahrzeugs angebenden Geschwindigkeitsmeßwertes (V) und vorgegebener, das Ausrollverhalten des Schienenfahrzeugs bei abgeschaltetem Antrieb beschreibender Ausrolldaten (AD) ein empfohlener Antriebsabschaltzeitpunkt (tab, soll) gebildet wird, ab dem das Schienenfahrzeug unter Einhaltung des Fahrplans den jeweils fahrplanseitig vorgesehenen nächsten Haltepunkt antriebslos rechtzeitig erreicht, und
- als das Abschaltsignal ein den empfohlenen Antriebsabschaltzeitpunkt angebendes Signal erzeugt wird,

**dadurch gekennzeichnet, daß**

- der tatsächliche Antriebsabschaltzeitpunkt ermittelt wird, zu dem der Antrieb nach dem Erzeugen des Abschaltsignals tatsächlich abgeschaltet wurde, und
- jeweils durch Differenzbildung zwischen dem tatsächlichen und dem jeweiligen empfohlenen Antriebsabschaltzeitpunkt (tab,ist; tab,soll) ein Zeitdifferenzwert gebildet wird.

8. Verfahren nach Anspruch 7,
   **dadurch gekennzeichnet, daß**

   - ein Warnsignal erzeugt wird, wenn der Zeitdifferenzwert einen vorgegebenen Schwellenwert überschreitet.

9. Verfahren nach Anspruch 7 oder 8,
   **dadurch gekennzeichnet, daß**

   - mit zumindest dem jeweils letzten gebildeten Zeitdifferenzwert ein Verzögerungswert gebildet wird und
   - der jeweils nächste empfohlene Antriebsabschaltzeitpunkt unter weiterer Berücksichtigung dieses gebildeten Verzögerungswerts ermittelt wird.

10. Verfahren nach Anspruch 9,
    **dadurch gekennzeichnet, daß**

    - unter Berücksichtigung des ermittelten Abstands, der ermittelten verbleibenden Fahrzeit, eines die Geschwindigkeit des Schienenfahrzeugs angebenden Geschwindigkeitsmeßwertes (V) und vorgegebener, das Ausrollverhalten des Schienenfahrzeugs bei abgeschaltetem Antrieb beschreibender Ausrolldaten (AD) zunächst ein Hilfs-Abschaltzeitpunkt errechnet wird, ab dem das Schienenfahrzeug unter Einhaltung des Fahrplans den jeweils fahrplanseitig vorgesehenen nächsten Haltepunkt antriebslos rechtzeitig erreicht, und anschließend

- mit dem Hilfs-Abschaltzeitpunkt und dem Verzögerungswert durch Differenzbildung ein vorverlegter Antriebsabschaltzeitpunkt ermittelt wird und der vorverlegte Antriebsabschaltzeitpunkt als der jeweils nächste empfohlene Antriebsabschaltzeitpunkt behandelt wird.

11. Verfahren nach einem der vorangehenden Ansprüche 7 bis 10,
**dadurch gekennzeichnet, daß**

- der empfohlene Antriebsabschaltzeitpunkt unter zusätzlicher Berücksichtigung eines vorgegebenen Bremsverlaufs und einer vorgegebenen Minimalgeschwindigkeit ermittelt wird, bei deren Unterschreiten das Schienenfahrzeug in der Phase des antriebslosen Zufahrens auf den nächsten Haltepunkt gemäß dem vorgegebenen Bremsverlauf abgebremst wird.

12. Anordnung mit einer Einrichtung (5) gemäß einem der Ansprüche 1 bis 6 und mit einer an einen Datenausgang (D10) der Einrichtung (5) angeschlossenen Auswerteeinrichtung,

- die aus der Einrichtung (5) den abgespeicherten tatsächlichen und den jeweils zugeordneten, empfohlenen Antriebsabschaltzeitpunkt (tab,ist; tab,soll) angebende Datensignale ausliest und
- die durch Differenzbildung zwischen dem tatsächlichen und dem zugeordneten empfohlenen Antriebsabschaltzeitpunkt (tab,ist; tab,soll) einen Zeitdifferenzwert bildet.

13. Anordnung nach Anspruch 12,
**dadurch gekennzeichnet, daß**

- die Auswerteeinrichtung eine streckenseitige Auswerteeinrichtung ist.

**Claims**

1. Device (5) for a rail vehicle having

- a control unit (10), which
- determines the distance between the rail vehicle and the respective intended next stop using a measured location measured value (S), which indicates the location of the rail vehicle, and predetermined, stored route data,
- determines the remaining travelling time to the next stop using a measured time measured value (t), which indicates the respective time, and a predetermined, stored timetable, and

- forms a recommended drive switching-off time (tab,nom) taking account of the determined distance, of the determined remaining travelling time, of a speed measured value (V) which indicates the speed of the rail vehicle, and predetermined coasting data (AD), which describes the coasting behaviour of the rail vehicle when the drive is switched off, from which drive switching-off time (tab,nom) the rail vehicle will reach the intended next stop on time in accordance with the respective timetable without being driven, and

- having an output device (30) which is connected to the control unit (10) and is driven by it, and which produces a switching-off signal which indicates the recommended drive switching-off time (tab,nom),
**characterized**
- **in that** the device (5) has a data input (E5) at which an actual value signal (Si) which indicates the actual drive switching-off time (tab,act) can be entered in the device (5), with the actual drive switching-off time (tab,act) indicating that time at which the drive was actually switched off after the switching-off signal was produced, and

- **in that** the control unit (10) has a memory in which
- it stores the actual drive switching-off time and the respectively associated, recommended drive switching-off time (tab,act; tab,nom), for evaluation.

2. Device according to Claim 1,
**characterized in that**

- the control unit (10) is designed such that it

- forms a time difference value by forming the difference between the actual drive switching-off time and the respectively associated recommended drive switching-off time (tab,act; tab,nom).

3. Device according to Claim 2,
**characterized in that**

- the control unit (10) has an output (A10) and is designed such that it

- produces a warning signal (WS) at its output when the time difference value exceeds a predetermined threshold value.

4. Device according to Claim 2 or 3,
**characterized in that**

- the control unit (1) is designed such that it

- forms a delay value using at least the respectively most recently formed time difference value, and
- determines the respectively most recent recommended drive switching-off time furthermore taking into account this delay value which has been formed.

5. Device according to Claim 4,
**characterized in that**

- the control unit (1) is designed such that it

- first of all calculates an auxiliary switching-off time, taking account of the determined distance, the determined remaining travelling time, a speed measured value (V) which indicates the speed of the rail vehicle, and predetermined coasting data (AD), which describes the coasting behaviour of the rail vehicle when the drive is switched off, from which auxiliary switching-off time the rail vehicle will reach the intended next stop on time in accordance with the respective timetable without being driven, and then
- forms the difference between the auxiliary switching-off time and the delay value to determine an advanced drive switching-off time, and treats the advanced drive switching-off time as the recommended drive switching-off time.

6. Device according to one of the preceding claims,
**characterized in that**

- the control unit (10) is designed such that it determines the recommended drive switching-off time by additionally taking into account a predetermined braking profile and a predetermined minimum speed which, if undershot, would result in the rail vehicle being braked in accordance with the predetermined braking profile in the phase when it is approaching the next stop without being driven.

7. Method for producing a switching-off signal, in which

- a measured location measured value (S), which indicates the location of the rail vehicle, and predetermined, stored route data are used to determine the distance between the rail vehicle and the respectively intended next stop,
- a measured time measured value (t), which indicates the respective time, and a predetermined, stored timetable are used to determine the remaining travelling time to the next stop, and
- taking account of the determined distance, the determined remaining travelling time, a speed measured value (V) which indicates the speed of the rail vehicle, and predetermined coasting data (AD), which describes the coasting behaviour of the rail vehicle when the drive is switched off, a recommended drive switching-off time (tab,nom) is formed, from which the rail vehicle will reach the intended next stop on time in accordance with the respective timetable without being driven, and
- a signal which indicates the recommended drive switching-off time is produced as the switching-off signal,

**characterized in that**

- the actual drive switching-off time is determined at which the drive was actually switched off after production of the switching-off signal, and
- a time difference value is in each case formed by forming the difference between the actual drive switching-off time and the respective recommended drive switching-off time (tab,act; tab,nom).

8. Method according to Claim 7,
**characterized in that**

- a warning signal is produced if the time difference value exceeds a predetermined threshold value.

9. Method according to Claim 7 or 8,
**characterized in that**

- a delay value is formed using at least the respective most recently formed time difference value, and

- the respective most recent recommended drive switching-off time is determined furthermore taking into account this delay value which has been formed.

10. Method according to Claim 9,
**characterized in that**

- taking account of the determined distance, the determined remaining travelling time, a speed measured value (V) which indicates the speed of the rail vehicle, and predetermined coasting data (AD), which describes the coasting behaviour of the rail vehicle when the drive is switched off, an auxiliary switching-off time is first of all calculated from which the rail vehicle will reach the intended next stop on time in accordance with the respective timetable without being driven, and then

- by forming the difference between the auxiliary switching-off time and the delay value, an advanced drive switching-off time is determined, and the advanced drive switching-off time is as the respective most recent recommended drive switching-off time.

11. Method according to one of the preceding Claims 7 to 10,
    **characterized in that**

    - the recommended drive switching-off time is determined by additionally taking into account a predetermined braking profile and a predetermined minimum speed which, if undershot, would result in the rail vehicle being braked in accordance with the predetermined braking profile in the phase when it is approaching the next stop without being driven.

12. Arrangement having a device (5) according to one of Claims 1 to 6 and having an evaluation device which is connected to a data output (D10) of the device (5),

    - which evaluation device reads from the device (5) data signals which indicate the stored actual drive switching-off time and the respective associated, recommended drive switching-off time (tab,act; tab,nom), and
    - forms a time difference value by forming the difference between the actual drive switching-off time and the associated recommended drive switching-off time (tab,act; tab,nom).

13. Arrangement according to Claim 12,
    **characterized in that**

    - the evaluation device is an evaluation device on the track side.

## Revendications

1. Dispositif (5) pour véhicule ferroviaire comportant

    - une unité de commande (10)

        - qui détermine la distance entre le véhicule ferroviaire et le point d'arrêt le plus proche prévu en servant d'une valeur de localisation mesurée (S), indiquant l'emplacement du véhicule ferroviaire, et des données de parcours prédéterminées et mémorisées,

        - qui détermine le temps de parcours restant jusqu'au prochain point d'arrêt en se servant d'une valeur de temps (t) mesurée, indiquant le temps respectif, et d'un horaire prédéterminé et mémorisé et

        - qui forme, en tenant compte de la distance déterminée, du temps de parcours restant déterminé, d'une valeur de vitesse mesurée (V) indiquant la vitesse du véhicule ferroviaire et de données de roulement sur l'erre (AD) prédéterminées décrivant le roulement sur l'erre du véhicule ferroviaire lorsque l'entraînement est arrêté, un instant d'arrêt d'entraînement recommandé (tab, théorique) à partir duquel, en respectant l'horaire, le véhicule ferroviaire atteint en temps voulu sans entraînement le point d'arrêt le plus proche prévu à chaque fois par l'horaire, et

    - un dispositif de sortie (10) qui est relié à l'unité de commande (10) et commandé par celle-ci, et qui génère le signal d'arrêt indiquant l'instant d'arrêt d'entraînement (tab, théorique),

    **caractérisé en ce que** le dispositif (5) comporte une entrée de données (E5) permettant d'entrer dans le dispositif (5) un signal de valeur réel (Si) indiquant l'instant réel d'arrêt d'entraînement (tab, réel), l'instant réel d'arrêt de l'entraînement (tab, réel) indiquant l'instant où l'entraînement a été réellement arrêté après avoir généré le signal d'arrêt, et **en ce que** l'unité de commande (10) comporte une mémoire dans laquelle est mémorisée l'instant d'arrêt d'entraînement réel et le temps d'arrêt d'entraînement recommandé associé (tab, réel ; tab, théorique) en vue de l'exploitation.

2. Dispositif selon la revendication 1, **caractérisé en ce que** l'unité de commande (10) est conformée de façon à former une valeur de différence de temps en formant la différence entre l'instant d'arrêt d'entraînement réel et l'instant d'arrêt d'entraînement recommandé associé (tab, réel; tab, théorique).

3. Dispositif selon la revendication 2, **caractérisé en ce que** l'unité de commande (10) comporte une sortie (A10) et est conformée de façon à générer un signal d'alarme (WS) au niveau de sa sortie lorsque la valeur de différence de temps dépasse une valeur de seuil prédéterminée.

4. Dispositif selon la revendication 2 ou 3, **caractérisé en ce que** l'unité de commande (10) est conformée de façon à former une valeur de retard avec au moins la dernière valeur de différence de temps formée et à déterminer l'instant d'arrêt d'entraînement recommandé suivant en tenant compte en plus de cette valeur de retard formée.

5. Dispositif selon la revendication 4, **caractérisé en ce que** l'unité de commande est conformée de façon à

   - calculer en outre, en tenant compte de la distance déterminée, du temps de parcours restant déterminé, de la valeur de vitesse mesurée (V) indiquant la vitesse du véhicule ferroviaire et de données de roulement sur l'erre (AD) prédéterminées décrivant le roulement sur l'erre du véhicule ferroviaire lorsque l'entraînement est arrêté, un instant d'arrêt d'entraînement auxiliaire à partir duquel, en respectant l'horaire, le véhicule ferroviaire atteint en temps voulu sans entraînement le point d'arrêt le plus proche prévu à chaque fois par l'horaire, et ensuite
   - déterminer un instant d'arrêt d'entraînement avancé à l'aide de l'instant d'arrêt d'entraînement auxiliaire et de la valeur de retard en formant un différence et à traiter l'instant d'arrêt d'entraînement avancé comme l'instant d'arrêt d'entraînement recommandé.

6. Dispositif selon l'une des revendications précédentes, **caractérisé en ce que** l'unité de commande (10) est conformée de façon à déterminer l'instant d'arrêt d'entraînement recommandé en tenant compte en plus d'une courbe de freinage prédéterminée et d'une vitesse minimale prédéterminée et, pour rester au-dessous de cette vitesse minimale, à commander le freinage du véhicule ferroviaire dans la phase d'approche sans entraînement du point d'arrêt le plus proche conformément à la courbe de freinage prédéterminée.

7. Procédé de génération d'un signal d'arrêt, dans lequel

   - on détermine la distance entre le véhicule ferroviaire et le point d'arrêt le plus proche prévu en servant d'une valeur de localisation mesurée (S), indiquant l'emplacement du véhicule ferroviaire, et de données de parcours prédéterminées et mémorisées,
   - on détermine le temps de parcours restant jusqu'au prochain point d'arrêt en se servant d'une valeur de temps (t) mesurée, indiquant le temps respectif, et d'un horaire prédéterminé et mémorisé et
   - on forme, en tenant compte de la distance déterminée, du temps de parcours restant déterminé, d'une valeur de vitesse mesurée (V) indiquant la vitesse du véhicule ferroviaire et de données de roulement sur l'erre (AD) prédéterminées décrivant le roulement sur l'erre du véhicule ferroviaire lorsque l'entraînement est arrêté, un instant d'arrêt d'entraînement recommandé (tab, théorique) à partir duquel, en respectant l'horaire, le véhicule ferroviaire atteint en temps voulu sans entraînement le point d'arrêt le plus proche prévu à chaque fois par l'horaire, et

   - on génère comme signal d'arrêt un signal indiquant l'instant d'arrêt d'entraînement (tab, théorique),

   **caractérisé en ce que** l'on détermine l'instant d'arrêt d'entraînement réel où l'entraînement a été réellement arrêté après avoir généré le signal d'arrêt, et **en ce que** l'on forme une valeur de différence de temps en formant la différence entre l'instant d'arrêt d'entraînement réel et l'instant d'arrêt d'entraînement recommandé associé (tab, réel ; tab, théorique).

8. Procédé selon la revendication 7, **caractérisé en ce que** l'on génère un signal d'alarme lorsque la valeur de différence de temps est supérieure à une valeur de seuil prédéterminé.

9. Procédé selon la revendication 7 ou 8, **caractérisé en ce que** l'on forme une valeur de retard avec au moins la dernière valeur de différence de temps formée et l'on détermine l'instant d'arrêt d'entraînement recommandé suivant en tenant compte en plus de cette valeur de retard formée.

10. Procédé selon la revendication 9, **caractérisé en ce que**

    - l'on calcule en outre, en tenant compte de la distance déterminée, du temps de parcours restant déterminé, de la valeur de vitesse mesurée (V) indiquant la vitesse du véhicule ferroviaire et de données de roulement sur l'erre (AD) prédéterminées décrivant le roulement sur l'erre du véhicule ferroviaire lorsque l'entraînement est arrêté, un instant d'arrêt d'entraînement auxiliaire à partir duquel, en respectant l'horaire, le véhicule ferroviaire atteint en temps voulu sans entraînement le point d'arrêt le plus proche prévu à chaque fois par l'horaire, et ensuite
    - l'on détermine un instant d'arrêt d'entraînement avancé à l'aide de l'instant d'arrêt d'entraînement auxiliaire et de la valeur de retard en formant un différence et l'on traite l'instant d'arrêt d'entraînement avancé comme l'instant d'arrêt d'entraînement recommandé.

11. Procédé selon l'une des revendications précédentes 7 à 10, **caractérisé en ce que** l'on détermine l'instant d'arrêt d'entraînement recommandé en tenant compte en plus d'une courbe de freinage prédéterminée et d'une vitesse minimale prédéterminée et, pour rester au-dessous de cette vitesse minimale, l'on commander le freinage du véhicule ferroviaire dans la phase d'approche sans entraînement du point d'arrêt le plus proche conformément à la courbe de freinage prédéterminée.

12. Equipement comportant un dispositif (5) selon l'une des revendications 1 à 6 et un dispositif d'exploitation, raccordé à une sortie de données (D10) du dispositif (5), qui reçoit du dispositif (5) des signaux de données indiquant l'instant d'arrêt d'entraînement réel et le temps d'arrêt d'entraînement recommandé associé (tab, réel ; tab, théorique) et qui former une valeur de différence de temps en formant la différence entre l'instant d'arrêt d'entraînement réel et l'instant d'arrêt d'entraînement recommandé associé (tab, réel ; tab, théorique).

13. Equipement selon la revendication 12, **caractérisé en ce que** le dispositif d'exploitation est un dispositif d'exploitation ferroviaire.

tab, soll
tab, ist

D10

E10A

S, V

15

A10

ST, WS

10

30

E10B

20

t

E10C

E10D
≙ E5

Si,
tab, ist

S0, t0, AD

25

5